# EUROPÄISCHE PATENTSCHRIFT

(11) **EP 4 165 318 B1**
(45) Veröffentlichungstag und Bekanntmachung des Hinweises auf die Patenterteilung: **15.01.2025**
(21) Anmeldenummer: 21732860.8
(22) Anmeldetag: 10.06.2021
(51) Int. Cl.: F16D 65/12

(54) **REIBBREMSKÖRPER, REIBBREMSE UND VERFAHREN ZUM HERSTELLEN EINES REIBBREMSKÖRPERS**
FRICTION BRAKE MEMBER, FRICTION BRAKE AND METHOD FOR MANUFACTORING
ÉLÉMENT DE FREIN À FRICTION, FREIN À FRICTION ET MÉTHODE D'ÉLABORATION

(30) Priorität: 15.06.2020 DE 102020207361
(43) Veröffentlichungstag der Anmeldung: 19.04.2023
(73) Patentinhaber: Robert Bosch GmbH, 70442 Stuttgart (DE); Buderus Guss GmbH, 35236 Breidenbach (DE)
(72) Erfinder: SCHNATTERER, Christian, 61440 Oberursel (DE); WU, Kangjian, 35041 Marburg (DE); POTAPENKO, Ilja, 35236 Biedenkopf (DE); PFEIFFER, Thomas, 35239 Steffenberg (DE)
(74) Vertreter: Clarenbach, Carl-Philipp
(86) Internationale Anmeldenummer: PCT/EP2021/065552
(87) Internationale Veröffentlichungsnummer: WO 2021/254857

(56) Entgegenhaltungen:
- EP-B1- 3 620 545
- DE-A1- 102010 048 075
- DE-A1- 102019 212 844

## Beschreibung

Die Erfindung betrifft einen Reibbremskörper, insbesondere Bremsscheibe, für eine Reibbremse eines Kraftfahrzeugs, wobei der Reibbremskörper einen Basiskörper mit zumindest einer Verschleißschutzschicht auf zumindest einem Reibkontaktbereich des Basiskörpers aufweist, wobei die Verschleißschutzschicht auf ihrer von dem Basiskörper abgewandten Seite eine Reibkontaktoberfläche bildet.

Weiterhin betrifft die Erfindung eine Reibbremse für ein Kraftfahrzeug, mit wenigstens einem Reibbremskörper, der wie er vorstehend beschrieben ausgebildet ist, mit wenigstens einem dem Reibbremskörper zugeordneten und verlagerbar angeordneten Bremsklotz.

Weiterhin betrifft die Erfindung ein Verfahren zur Herstellung des vorstehend beschriebenen Reibbremskörpers.

### Stand der Technik

Reibbremskörper für Kraftfahrzeuge, insbesondere Bremsscheiben für Reibbremsen, sind aus dem Stand der Technik bereits bekannt. Bei bestimmungsgemäßem Gebrauch ist der Reibbremskörper, insbesondere die Bremsscheibe, drehfest mit einem Rad eines Kraftfahrzeugs verbunden und einem verlagerbaren Bremsklotz gegenüberliegend angeordnet. Wird der Bremsklotz gegen den Reibbremskörper gepresst, so entsteht Reibung zwischen Reibbremskörper und Bremsklotz, durch welche die Radgeschwindigkeit des Rads reduziert, das Rad also gebremst wird. Um den Verschleiß bei der auftretenden Reibung zu reduzieren, ist es außerdem bekannt, eine Verschleißschutzschicht zumindest in dem Reibkontaktbereich des Basiskörpers aufzubringen, welche mit dem Bremsklotz zusammenwirkt. Die Verschleißschutzschicht reduziert während eines Bremsvorgangs den Verschleiß und verlängert dadurch die Lebensdauer des Reibbremskörpers selbst sowie der Reibbremse insgesamt.

Aus der Offenlegungsschrift EP 3 034 902 A1 ist bereits eine beschichtete Bremsscheibe bekannt, bei welcher eine Verschleißschutzschicht mit eingelagerten Keramikpartikeln mittels Laserauftragsschweißen hergestellt wird. Aus der Offenlegungsschrift DE 10 2010 048 075 A1 ist weiterhin bereits eine Bremsscheibe bekannt, mit einem Grundkörper aus einem graphithaltigen metallischen Werkstoff und mit einer Verschleißschutzschicht auf seinen Reibflächen, wobei eine an die Verschleißschutzschicht angrenzende Oberflächenschicht der Reibflächen keinen Graphit aufweist.

DE 10 2019 212 844 A1 kann auch als Dokument zum Stand der Technik zitiert werden.

### Offenbarung der Erfindung

Der erfindungsgemäße Reibbremskörper mit den Merkmalen des Anspruchs 1 hat den Vorteil, dass die Rissbeständigkeit des Reibbremskörpers in vorteilhafter Weise erhöht ist. Erfindungsgemäß wird dies dadurch erreicht, dass die Härte der Verschleißschutzschicht ausgehend von dem Basiskörper bis zu der Reibkontaktoberfläche stufenweise zunimmt. Dadurch wird die Rissbeständigkeit der Beschichtung ausgehend von der Reibkontaktoberfläche zu dem Basiskörper hin erhöht, wodurch eine Rissausbreitung in den Basiskörper hinein vermieden wird. Es ergibt sich dadurch ein Reibbremskörper, der einerseits an der Reibkontaktoberfläche eine besonders hohe Härte und damit Verschleißfestigkeit aufweist, und gleichzeitig eine ausreichende Duktilität und Rissbeständigkeit, die verhindert, dass sich ein an der Reibkontaktoberfläche entstehender Riss bis in den Basiskörper hinein ausbreitet. Dadurch ist der Reibbremskörper auch thermomechanischen Beanspruchungen aussetzbar, wie sie beispielsweise bei einer Vollbremsung auftreten können, ohne dass sich ein Riss im Basiskörper bildet oder bis in den Basiskörper ausbereitet, wodurch sich die mechanische Festigkeit und Robustheit, auch in Bezug auf Korrosionsbeständigkeit, insgesamt erhöht. Das Risswachstum, falls ein Riss auftritt, findet damit an dem erfindungsgemäßen Reibbremskörper bevorzugt entlang der Hartstoffe statt, da diese als Einschlüsse die Bruchzähigkeit der Verschleißschutzschicht herabsetzen, erfindungsgemäß jedoch stärker im Bereich der Reibkontaktoberfläche als im Bereich des Basiskörpers auftreten.

Gemäß einer bevorzugten Weiterbildung der Erfindung weist die Verschleißschutzschicht einen von dem Basiskörper zu der Reibkontaktoberfläche zunehmenden Anteil von karbidbildenden Elementen und Kohlenstoff auf. Hierdurch wird erreicht, dass der Härtegrad der Verschleißschutzschicht in Richtung der Reibkontaktoberfläche, wie vorstehend beschrieben, zunimmt. Die karbidbildenden Elemente werden insbesondere bei einem Laserauftragsschweißen in die Verschleißschutzschicht eingebracht. Vorzugsweise weist die Verschleißschutzschicht eine Eisen-Basis-Legierung auf, in welcher die karbidbildenden Elemente aufgenommen und gegebenenfalls aufgeschmolzen werden.

Vorzugsweise sind als karbidbildende Elemente Vanadium, Niob, Titan und/oder Chrom vorhanden. Beim Erstarren bilden sich durch Reaktion der karbidbildenden Elemente mit Kohlenstoffatomen der Basislegierung Metallkarbide in der Verschleißschutzschicht fein-verteilt aus, die die Schichthärte und damit den Verschleißwiderstand der Verschleißschutzschicht erhöhen.

Weiterhin ist bevorzugt vorgesehen, dass der Kohlenstoffgehalt in der Verschleißschutzschicht von dem Basissubstrat zu der Reibkontaktoberfläche linear oder degressiv zunimmt. Die lineare Zunahme wirkt sich besonders positiv auf die Rissbeständigkeit der Verschleißschutzschicht aus. Die degressive Zunahme der Kohlenstoffkonzentration zeichnet sich dadurch aus, dass der Kohlenstoff-Konzentrationsgradient ausgehend vom Substrat in Richtung Beschichtungsoberfläche abnimmt. Die degressive Zunahme kombiniert die gesteigerte Rissbeständigkeit mit einer möglichst langen Aufrechterhaltung des Reibwertes der Verschleißschutzschicht bei Bremsungen.

Erfindungsgemäß ist die Verschleißschutzschicht dreilagig, ausgebildet, wobei die Härte von Lage zu Lage zunimmt. In diesem Fall ist also eine stufenweise Erhöhung der Härte beziehungsweise ein stufenweiser Härteverlauf der Verschleißschutzschicht ausgehend von dem Basiskörper zu der Reibkontaktoberfläche gewährleistet. Die Verschleißschutzschicht kann grundsätzlich mindestens zwei, vorzugsweise drei oder auch mehr als drei Lagen aufweisen, die zusammen die Verschleißschutzschicht auf dem Basiskörper ausbilden, wobei die Lagen parallel zum Basiskörper schichtweise übereinander liegen.

Erfindungsgemäßweist die auf dem Basiskörper angeordnete erste Lage der Verschleißschutzschicht einen Kohlenstoffgehalt von weniger als 0,2 Gew.-%, insbesondere weniger als 0,1 Gew.-% auf. Damit dient die erste Lage primär als duktile Pufferschicht ohne oder nur mit einem geringen Karbidanteil und mit einem geringen Kohlenstoffgehalt.

Auf der ersten Lage ist erfindungsgemäßeine zweite Lage angeordnet, deren Kohlenstoffgehalt höher ist als der in der ersten Lage, wobei der Kohlenstoffgehalt zwischen 0,2 Gew.-% und 1,5 Gew.-%, insbesondere zwischen 0,1 Gew.-% und 1,0 Gew.-% liegt. Die zweite Lage stellt dabei einen Übergangsbereich zu der dritten Lage, die auf der der ersten Lage abgewandten Seite der zweiten Lage liegt, dar. Durch die Einführung der Übergangsschicht wird nicht nur die Haftung zwischen der ersten und der dritten Lage verbessert, sondern die thermomechanischen Spannungen im Schichtsystem der Verschleißschutzschicht bei Bremsungen reduziert.

Erfindungsgemäßweist die dritte Lage, die, wie obenstehend bereits erwähnt, auf der von der ersten Lage abgewandten Seite der zweiten Lage liegt oder angeordnet ist, den höchsten Kohlenstoffgehalt der Lagen auf, insbesondere einen Kohlenstoffgehalt von mehr als 1,0 Gew.-%. Damit fungiert die dritte Lage als eigentliche Verschleißschutzschicht mit der höchsten Schichthärte und Verschleißbeständigkeit.

Vorzugsweise ist das Verhältnis von Kohlenstoffgehalt und karbidbildenden Elementen derart gewählt, dass die Kohlenstoffatome vollständig oder nahezu vollständig in den Karbiden abgebunden sind. Der Gehalt der karbidbildenden Metallatome wird vorzugsweise analog zum Kohlenstoffgehalt in der Beschichtung ausgebildet, weil für die Ausbildung der Metallkarbide neben Kohlenstoff auch karbidbildende Metallatome, wie Vanadium, Titan, Niob oder Chrom benötigt werden.

Weiterhin ist bevorzugt vorgesehen, dass die vorhandenen karbidbildenden Elemente eine höhere Kohlenstoffaffinität aufweisen als Chrom. Dadurch wird gewährleistet, dass im Falle einer optionalen zusätzlichen Zulegierung von Chrom, welches für die Erhöhung der Korrosionsbeständigkeit der Verschleißschutzschicht von Vorteil ist, Chrom nicht als Karbidbildner fungiert und somit für den Korrosionsschutz der Verschleißschutzschicht zur Verfügung steht.

Die erfindungsgemäße Reibbremse mit den Merkmalen des Anspruchs 6 zeichnet sich durch die erfindungsgemäße Ausbildung des Reibbremskörpers aus. Es ergeben sich hierdurch die bereits genannten Vorteile.

Das erfindungsgemäße Verfahren mit den Merkmalen des Anspruchs 7 zeichnet sich dadurch aus, dass die Verschleißschutzschicht mit einer von dem Basiskörper bis zu der Reibkontaktoberfläche stufenweise zunehmenden Härte hergestellt wird. Hierzu wird insbesondere der Anteil von karbidbildenden Elementen und Kohlenstoff von dem Basiskörper zu der Reibkontaktoberfläche hin erhöht. Dabei werden insbesondere als karbidbildende Elemente Vanadium, Titan, Niob und/oder Chrom verwendet, wobei der Kohlenstoffgehalt bevorzugt von dem Basissubstrat zu der Reibkontaktoberfläche linear oder degressiv zunimmt. Erfindungsgemäß wird die Verschleißschutzschicht mehrlagig, insbesondere dreilagig, hergestellt, mit einem zunehmenden Härtegrad von Lage zu Lage.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: einen vorteilhaften Reibbremskörper in einer perspektivischen Darstellung, und
- Figur 2: eine schematische Schnittdarstellung des Reibbremskörpers zur Erläuterung des vorteilhaften Aufbaus des Reibbremskörpers sowie eines vorteilhaften Herstellungsverfahrens.

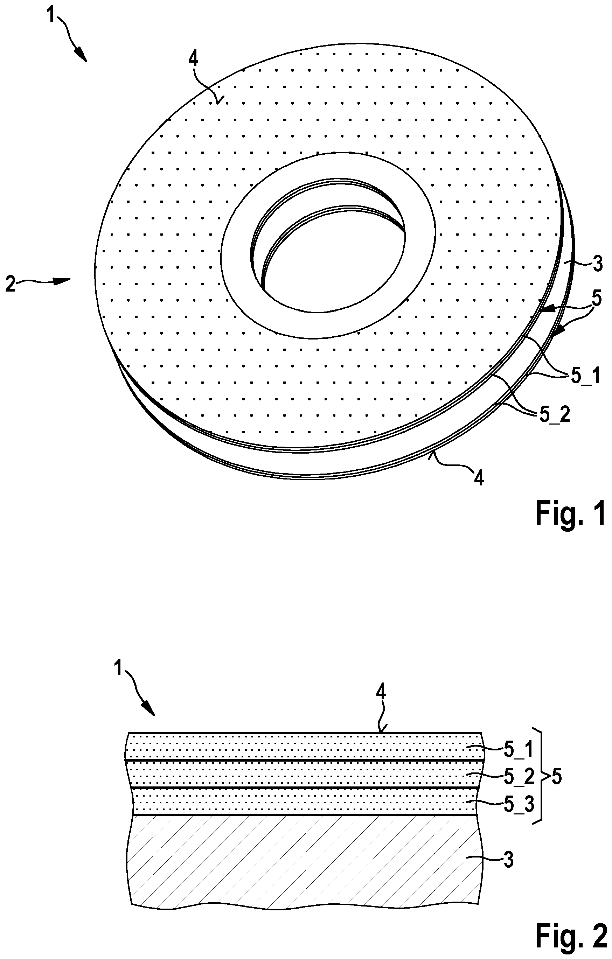

Figur 1 zeigt in einer vereinfachten perspektivischen Darstellung einen als Bremsscheibe 1 ausgebildeten Reibbremskörper einer hier nicht näher dargestellten Reibbremse 2 eines Kraftfahrzeugs. Die Bremsscheibe 1 ist kreisringförmig ausgebildet und dient dazu, mit einem verlagerbaren Bremsklotz der Reibbremse, der gegen zumindest eine der Stirnseiten der Bremsscheibe 1 pressbar ist, zusammen zu wirken. Ein optional vorhandener Bremsscheibentopf ist in Figur 1 nicht gezeigt.

Die Bremsscheibe 1 weist einen Basiskörper 3 auf, der kreisringförmig ausgebildet ist und auf seinen Stirnseiten jeweils eine Reibkontaktoberfläche 4 auf, die durch eine Verschleißschutzschicht 5 auf dem Basiskörper 3 gebildet ist. Der Basiskörper 3 ist vorzugsweise aus Grauguss gefertigt und die Verschleißschutzschicht 5 erstreckt sich zumindest über einen Reibkontaktbereich der jeweiligen Stirnseite des Basiskörpers 3. Die Verschleißschutzschicht ist beispielsweise durch ein Laserauftragsschweißverfahren auf dem Basiskörper 3 hergestellt.

Die Verschleißschutzschicht 5 zeichnet sich dabei dadurch aus, dass sie ausgehend von dem Basiskörper 3 bis zu der freien Reibkontaktoberfläche 4 eine zunehmende Härte aufweist. Insbesondere weist die Verschleißschutzschicht axial beziehungsweise in Richtung von dem Basiskörper 3 zu der Reibkontaktoberfläche 4 eine stufenweisen oder kontinuierlichen Härteverlauf auf. Gemäß dem Ausführungsbeispiel von Figur 1 ist die Verschleißschutzschicht 5 mehrlagig, nämlich zweilagig ausgebildet, sodass die Verschleißschutzschicht 5 aus zwei Lagen 5_1 und 5_2 gebildet ist, wobei die außenliegende Lage 5_1 eine höhere Härte aufweist, als die zwischen der Lage 5_1 und dem Basiskörper 3 liegende Lage 5_2. Insbesondere werden die unterschiedlichen Härtegrade der beiden Lagen 5_1, 5_2 durch unterschiedliche Anteile von karbidbildenden Elementen und Kohlenstoff gewährleistet. Dadurch, dass die Härte der Verschleißschutzschicht ausgehend von dem Basiskörper 3 bis zu der Schichtoberfläche an der Reibkontaktoberfläche 4 erhöht wird, ergibt sich eine verbesserte Rissbeständigkeit der Bremsscheibe 1. Insbesondere wird durch die vorteilhafte Ausbildung gewährleistet, dass eine Rissausbreitung in den Basiskörper 3 hinein vermieden wird. Erreicht wird dies durch eine gradierte Verteilung von Kohlenstoff und karbidbildenden Elementen, wie beispielsweise Vanadium, Titan, Niob oder Chrom innerhalb der Verschleißschutzschicht 5. Beim Erstarren bilden sich durch die Reaktion der karbidbildenden Elemente mit Kohlenstoffatomen Metallkarbide in der Verschleißschutzschicht 5 fein-verteilt aus, die die Schichthärte der jeweiligen Lage 5_1, 5_2 und damit den Verschleißwiderstand der Verschleißschutzschicht 5 erhöhen. Der Gehalt von Kohlenstoff und karbidbildenden Elementen nimmt dabei in Richtung der Reibkontaktoberfläche 4 zu, wobei er gemäß dem vorliegenden Ausführungsbeispiel von Figur 1 stufenförmig von Lage 5_2 zu Lage 5_1 zunimmt. Gemäß einer alternativen Ausführungsform nimmt die Härte der Verschleißschutzschicht 5 beziehungsweise der Gehalt an Kohlenstoff und karbidbildenden Elementen kontinuierlich von dem Basiskörper 3 bis zu der Reibkontaktoberfläche 4 zu.

Die Verschleißschutzschicht 5 weist insbesondere eine Eisen-Basislegierung auf, deren Kohlenstoffgehalt innerhalb der Verschleißschutzschicht 5 ausgehend von dem Basiskörper bis hin zur Reibkontaktoberfläche 4 tendenziell ansteigt. Dies wird beispielsweise durch eine Variation des Beschichtungswerkstoffs erreicht. Der Kohlenstoffgehalt nimmt dabei bevorzugt zumindest im Wesentlichen linear oder degressiv zu, wobei eine lineare Zunahme die Rissbeständigkeit verbessert und eine degressive Zunahme eine möglichst lange Aufrechterhaltung des Reibwerts an der Reibkontaktoberfläche 4 gewährleistet.

Figur 2 zeigt ein weiteres Ausführungsbeispiel der Bremsscheibe 1, wobei Figur 2 eine Längsschnittdarstellung eines Ausschnitts der Bremsscheibe 1 zeigt. Im Unterschied zu dem vorhergehenden Ausführungsbeispiel ist die Verschleißschutzschicht 5 nunmehr dreilagig ausgebildet, wobei eine dritte Lage 5_3 zwischen dem Basiskörper 3 und der bisherigen Lage 5_2 vorhanden ist. Der Kohlenstoffgehalt von Lage zu Lage variiert, um eine stufenweise Zunahme in Richtung der Reibkontaktoberfläche 4 zu gewährleisten.

Die erste Lage 5_3 auf dem Basiskörper 3 dient dabei primär als duktile Pufferschicht ohne oder mit nur einem geringen Karbidanteil und weist daher auch nur einen geringen Kohlenstoffgehalt von vorzugsweise weniger als 0,1 Gew.-% auf.

Die zweite Lage 5_2 stellt einen Übergangsbereich zu der äußeren Lage 5_1, die die Reibkontaktoberfläche 4 ausbildet, dar. Durch die Lage 5_2 wird nicht nur die Haftung zwischen den Lagen 5_1 und 5_3 verbessert, sondern auch thermomechanische Spannungen im Schichtsystem bei Bremsungen mit der Bremsscheibe 1 reduziert. Die Lage 5_2 weist dazu einen höheren Kohlenstoffgehalt als die erste Lage 5_3 auf, bevorzugt zwischen 0,1 Gew.-% und 1,0 Gew.-%.

Die dritte Lage 5_1 fungiert als eigentliche Verschleißschutzschicht und bildet daher die Reibkontaktoberfläche 4 aus. Die dritte Lage 5_1 zeichnet sich durch den höchsten Kohlenstoffgehalt und somit durch die höchste Schichthärte aus. Der Kohlenstoffgehalt der Lage 5_1 liegt somit vorzugsweise höher als 1,0 Gew.- %.

Da für die Ausbildung von Metallkarbiden neben Kohlenstoff auch karbidbildende Elemente, wie beispielsweise Vanadium, Titan, Niob oder Chrom eingesetzt werden, wie vorstehend bereits erwähnt, ist der Gehalt der karbidbildenden Elemente vorzugsweise analog zu dem Kohlenstoffgehalt in den Lagen 5_1 bis 5_3 verteilt beziehungsweise variiert. Vorzugsweise ist das Verhältnis des Kohlenstoffgehalts und der karbidbildenden Metallatome derart gewählt, dass es zur vollständigen Abbindung der Kohlenstoffatome in Karbiden in der jeweiligen Lage 5_1 bis 5_3 kommt. Darüber hinaus ist bevorzugt, dass die zulegierten karbidbildenden Metallatome eine höhere Kohlenstoff-Affinität aufweisen als Chrom. Hierdurch wird erreicht, dass im Falle einer zusätzlichen Zulegierung von Chrom, welches für die Erhöhung der Korrosionsbeständigkeit der Verschleißschutzschicht von Vorteil ist, Chrom nicht als Karbidbildner fungiert und somit für den Korrosionsschutz der Verschleißschutzschicht 5 zur Verfügung steht.

## Patentansprüche

1. Reibbremskörper, insbesondere Bremsscheibe (1), für eine Reibbremse (2) eines Kraftfahrzeugs, wobei der Reibbremskörper einen Basiskörper (3) mit zumindest einer Verschleißschutzschicht (5) auf zumindest einem Reibkontaktbereich des Basiskörpers (3) aufweist, wobei die Verschleißschutzschicht (5) auf ihrer von dem Basiskörper (3) abgewandten Seite eine Reibkontaktoberfläche (4) bildet, **wobei** die Härte der Verschleißschutzschicht (5) ausgehend von dem Basiskörper (3) bis zu der Reibkontaktoberfläche (4) stufenweise zunimmt, **dadurch gekennzeichnet, dass** die Verschleißschutzschicht (5) dreilagig ausgebildet ist, wobei die Härte von Lage (5_1 -5_3) zu Lage (5_1-5_3) zunimmt, wobei eine auf dem Basiskörper (3) angeordnete erste Lage (5_3) einen Kohlenstoffgehalt von weniger als 0,2 Gew.-%, insbesondere weniger als 0,1 Gew.-% aufweist, wobei eine auf der ersten Lage (5_3) angeordnete zweite Lage (5_2) einen höheren Kohlenstoffgehalt als die erste Lage (5_3) aufweist, insbesondere einen Kohlenstoffgehalt zwischen 0,1 Gew.-% und 1,0 Gew.-% und wobei auf der von der ersten Lage (5_3) abgewandten Seite der zweiten Lage (5_2) eine dritte Lage (5_1) angeordnet ist, die den höchsten Kohlenstoffgehalt der Lagen (5_1-5_3) aufweist, insbesondere größer als 1,0 Gew.-%.

2. Reibbremskörper nach Anspruch 1, **dadurch gekennzeichnet, dass** die Verschleißschutzschicht (5) einen von dem Basiskörper (3) zu der Reibkontaktoberfläche (4) zunehmenden Anteil von karbidbildenden Elementen und Kohlenstoff aufweist.

3. Reibbremskörper nach einem der vorhergehenden Ansprüche, **dadurch gekennzeichnet, dass** als karbidbildende Elemente Vanadium, Niob, Wolfram, Titan und/oder Chrom vorhanden sind.

4. Reibbremskörper nach einem der vorhergehenden Ansprüche, **dadurch gekennzeichnet, dass** das Verhältnis von Kohlenstoffgehalt und karbidbildenden Elementen derart gewählt ist, dass die Kohlenstoffatome vollständig oder nahezu vollständig in den Karbiden abgebunden sind.

5. Reibbremskörper nach einem der vorhergehenden Ansprüche, **dadurch gekennzeichnet, dass** andere vorhandene karbidbildende Elemente eine höhere Kohlenstoffaffinität aufweisen als Chrom, im Falle einer zusätzlichen Zulegierung von Chrom.

6. Reibbremse (2) für ein Kraftfahrzeug, mit zumindest einem Reibbremskörper und mit zumindest einem dem Reibbremskörper zugeordneten und verlagerbaren Bremsklotz, **gekennzeichnet durch** die Ausbildung des Reibbremskörpers, insbesondere als Bremsscheibe (1) gemäß einem der Ansprüche 1 bis 5.

7. Verfahren zum Herstellen eines Reibbremskörpers, insbesondere gemäß einem der Ansprüche 1 bis 5, für eine Reibbremse (2) eines Kraftfahrzeugs, wobei der Reibbremskörper aus einem Basiskörper (3) mit zumindest einer Verschleißschutzschicht (5) auf zumindest einem Reibkontaktbereich des Basiskörpers (3) derart hergestellt wird, dass der Verschleißschutzschicht (5) auf ihrer von dem Basiskörper (3) abgewandten Seite eine Reibkontaktoberfläche (4) ausbildet, **wobei** die Verschleißschutzschicht (5) mit einer von dem Basiskörper (3) bis zu der Reibkontaktoberfläche(4) stufenweise zunehmenden Härte hergestellt wird, **dadurch gekennzeichnet, dass** die Verschleißschutzschicht dreilagig hergestellt wird, mit einem zunehmenden Härtegrad von Lage zu Lage, wobei eine auf dem Basiskörper (3) angeordnete erste Lage (5_3) einen Kohlenstoffgehalt von weniger als 0,2 Gew.-%, insbesondere weniger als 0,1 Gew.-% aufweist, wobei eine auf der ersten Lage (5_3) angeordnete zweite Lage (5_2) einen höheren Kohlenstoffgehalt als die erste Lage (5_3) aufweist, insbesondere einen Kohlenstoffgehalt zwischen 0,1 Gew.-% und 1,0 Gew.-% und wobei auf der von der ersten Lage (5_3) abgewandten Seite der zweiten Lage (5_2) eine dritte Lage (5_1) angeordnet ist, die den höchsten Kohlenstoffgehalt der Lagen (5_1-5_3) aufweist, insbesondere größer als 1,0 Gew.-%.

## Claims

1. Friction brake member, in particular brake disc (1), for a friction brake (2) of a motor vehicle, wherein the friction brake member comprises a base member (3) having at least one wear protection layer (5) on at least one frictional contact area of the base member (3), wherein the wear protection layer (5) forms a frictional contact surface (4) on its side facing away from the base member (3), wherein the hardness of the wear protection layer (5) increases stepwise from the base member (3) up to the frictional contact surface (4), **characterised in that** the wear protection layer (5) is formed in three layers, wherein the hardness increases from layer (5_1-5_3) to layer (5_1-5_3), wherein a first layer (5_3) arranged on the base member (3) comprises a carbon content of less than 0.2 % by weight, in particular less than 0.1 % by weight, wherein a second layer (5_2) arranged on the first layer (5_3) comprises a higher carbon content than the first layer (5_3), in particular a carbon content between 0.1 % by weight and 1.0 % by weight, and wherein a third layer (5_1) is arranged on the side of the second layer (5_2) facing away from the first layer (5_3), which comprises the highest carbon content of the layers (5_1-5_3), in particular greater than 1.0 % by weight.

2. Friction brake member according to claim 1, **characterised in that** the wear protection layer (5) comprises a proportion of carbide-forming elements and carbon which increases from the base member (3) to the frictional contact surface (4).

3. Friction brake member according to one of the preceding claims, **characterised in that** vanadium, niobium, tungsten, titanium and/or chromium are present as carbide-forming elements.

4. Friction brake member according to one of the preceding claims, **characterised in that** the ratio of carbon content and carbide-forming elements is selected in such a way that the carbon atoms are completely or almost completely bound in the carbides.

5. Friction brake member according to one of the preceding claims, **characterised in that** other carbide-forming elements present comprise a higher carbon affinity than chromium, in the case of an additional alloying of chromium.

6. Friction brake (2) for a motor vehicle, with at least one friction brake member and with at least one displaceable brake pad assigned to the friction brake member, **characterised by** the design of the friction brake member, in particular as a brake disc (1) according to one of claims 1 to 5.

7. Method for manufacturing a friction brake member, in particular according to one of claims 1 to 5, for a friction brake (2) of a motor vehicle, wherein the friction brake member is manufactured from a base member (3) with at least one wear protection layer (5) on at least one frictional contact area of the base member (3) in such a way that the wear protection layer (5) forms a frictional contact surface (4) on its side facing away from the base member (3), wherein the wear protection layer (5) is manufactured with a hardness which increases stepwise from the base member (3) up to the frictional contact surface (4), **characterised in that** the wear protection layer is manufactured in three layers, with an increasing degree of hardness from layer to layer, wherein a first layer (5_3) arranged on the base member (3) comprises a carbon content of less than 0.2 % by weight, in particular less than 0.1 % by weight, wherein a second layer (5_2) arranged on the first layer (5_3) comprises a higher carbon content than the first layer (5_3), in particular a carbon content between 0.1 % by weight and 1.0 % by weight, and wherein a third layer (5_1) is arranged on the side of the second layer (5_2) facing away from the first layer (5_3), which comprises the highest carbon content of the layers (5_1-5_3), in particular greater than 1.0 % by weight.

## Revendications

1. Élément de frein à friction, en particulier disque de frein (1) pour un frein à friction (2) d'un véhicule automobile, le corps de frein à friction présentant un élément de base (3) avec au moins une couche de protection contre l'usure (5) sur au moins une zone de contact à friction de l'élément de base (3), la couche de protection contre l'usure (5) formant une surface de contact à friction (4) sur la face de la couche de protection contre l'usure opposée à l'élément de base (3), où la dureté de la couche de protection contre l'usure (5) augmente progressivement depuis l'élément de base (3) jusqu'à la surface de contact à friction (4), **caractérisé en ce que** la couche de protection contre l'usure (5) est constituée de trois couches, la dureté augmentant de couche (5_1-5_3) en couche (5_1-5_3), une première couche (5_3) disposée sur l'élément de base (3) présentant une teneur en carbone inférieure à 0,2 % en poids, en particulier inférieure à 0,1 % en poids, une deuxième couche (5_2) disposée sur la première couche (5_3) présentant une teneur en carbone supérieure à la première couche (5_3), en particulier une teneur en carbone entre 0,1 % en poids et 1,0 % en poids, et une troisième couche (5_1) étant disposée sur la face de la deuxième couche (5_2) opposée à la première couche (5_3), présentant la plus forte teneur en carbone parmi les couches (5_1-5_3), en particulier supérieure à 1,0 % en poids.

2. Élément de frein à friction selon la revendication 1, **caractérisé en ce que** la couche de protection contre l'usure (5) présente une teneur en éléments constitutifs de carbures et en carbone croissante de l'élément de base (3) vers la surface de contact à friction (4).

3. Élément de frein à friction selon l'une quelconque des revendications précédentes, **caractérisé en ce que** sont présents comme éléments constitutifs de carbures le vanadium, le niobium, le tungstène, le titane et/ou le chrome.

4. Élément de frein à friction selon l'une quelconque des revendications précédentes, **caractérisé en ce que** le rapport de la teneur en carbone aux éléments constitutifs de carbures est choisi de sorte que les atomes de carbone soient totalement ou presque totalement intégrés dans les carbures.

5. Élément de frein à friction selon l'une quelconque des revendications précédentes, **caractérisé en ce que** d'autres éléments constitutifs de carbures présents aient une plus forte affinité envers le carbone que le chrome dans le cas d'un ajout de chrome par alliage.

6. Frein à friction (2) pour un véhicule automobile, avec au moins un élément de frein à friction et avec au moins une plaquette de frein affectée à l'élément de frein à friction et amovible, **caractérisé par** la conception de l'élément de frein à friction, en particulier en tant que disque de frein (1), selon l'une des revendications 1 à 5.

7. Procédé de fabrication d'un élément de frein à friction, en particulier selon l'une des revendications 1 à 5, pour un frein à friction (2) d'un véhicule automobile, le corps de frein à friction étant produite en un élément de base (3) avec au moins une couche de protection contre l'usure (5) sur au moins une zone de contact à friction de l'élément de base (3), de sorte que la couche de protection contre l'usure (5) forme une surface de contact à friction (4) sur la face de la couche de protection contre l'usure (5) opposée à l'élément de base (3), où la dureté de la couche de protection contre l'usure (5) augmente progressivement depuis l'élément de base (3) jusqu'à la surface de contact à friction (4), **caractérisé en ce que** la couche de protection contre l'usure est produite par trois couches, le degré de dureté augmentant d'une couche à l'autre, une première couche (5_3) disposée sur l'élément de base (3) présentant une teneur en carbone inférieure à 0,2 % en poids, en particulier inférieure à 0,1 % en poids, une deuxième couche (5_2) disposée sur la première couche (5_3) présentant une teneur en carbone supérieure à la première couche (5_3), en particulier une teneur en carbone entre 0,1 % en poids et 1,0 % en poids, et une troisième couche (5_1) étant disposée sur la face de la deuxième couche (5_2) opposée à la première couche (5_3), présentant la plus forte teneur en carbone parmi les couches (5_1-5_3), en particulier supérieure à 1,0 % en poids.
